# EUROPEAN PATENT APPLICATION

(11) **EP 1 746 011 A1**
(43) Date of publication of application: **24.01.2007**
(21) Application number: 05728831.8
(22) Date of filing: 05.04.2005
(51) Int. Cl.: B62D 5/04

(54) **ELECTRIC POWER STEERING DEVICE**

(30) Priority: 06.04.2004 JP 2004112372; 06.04.2004 JP 2004112369; 04.06.2004 JP 2004167365; 28.01.2005 JP 2005022069
(71) Applicant: NSK LTD., Shinagawa-ku, Tokyo 141-8560 (JP)
(72) Inventor: SEGAWA, Toru, NSK STEERING SYSTEMS CO., LTD., Maebashi-shi, Gunma 371-8528 (JP); EDA, Hiroshi, NSK STEERING SYSTEMS CO., LTD., Maebashi-shi, Gunma 371-8528 (JP); CHIKARAISHI, Kazuo, NSK STEERING SYSTEMS CO., LTD., Maebashi-shi, Gunma 371-8528 (JP); SOMEYA, Kenji, NSK STEERING SYSTEMS CO., LTD., Maebashi-shi, Gunma 371-8528 (JP); ONIZUKA, Toshiyuki, NSK STEERING SYSTEMS CO., LTD., Maebashi-shi, Gunma 371-0845 (JP)
(74) Representative: Cross, James Peter Archibald
(86) International application number: PCT/JP2005/006994
(87) International publication number: WO 2005/097577

(57) **Abstract**

In an electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, the gear meshing position in the worm gear mechanism and the position of the torque sensor are arranged to be substantially coincide with each other with respect to the axial direction of the output shaft. Alternatively, a worm wheel of the worm gear mechanism is directly supported on a housing in a rotatable manner by means of a bearing. A steering shaft and an input shaft of a power assist section are fixedly connected in close contact attained by plastic deformation.

## Description

### Technical Field

The present invention relates to an electric power steering apparatus that generates a steering assist torque by an electric motor in response to a steering torque applied on the steering wheel and transmits the steering assist torque to an output shaft of the steering mechanism with a speed reduced by a worm gear mechanism.

### Background Art

In automobile steering systems, what is called a power steering system that provides steering assist using an external power source is widely used. Conventionally, a vane hydraulic pump is used as the power source of the power steering apparatus, and in many cases the hydraulic pump is driven by the engine. However, this type of power steering apparatus suffers from large drive power loss (which amounts to about several to ten horsepowers at times of maximum load) due to continuous driving of the hydraulic pump. For this reason, it is difficult to use this type of power steering apparatus in mini-sized motor vehicles with a small displacement engine, and even in the case where it is used in an automobile with a relatively large displacement engine, an unignorable decrease in fuel economy has been inevitable.

As a solution for these problems, electric power steering apparatuses (which will be referred to as EPS hereinafter) using an electric motor as a power source have been drawing attention in recent years. Since the EPS uses as the power source for the electric motor an in-vehicle battery, it does not suffer from direct drive power loss in the engine, and since the electric motor is activated only when steering assist is performed, a decrease in fuel economy can be suppressed. In addition, it has further advantageous features such as that electronic control can be performed very easily.

In the EPS, a steering assist torque is generated by an electric motor in response to a steering torque applied on the steering wheel, and it is transmitted to the output shaft of the steering mechanism with a reduced speed by means of a power transmission mechanism including a speed reducer.

In the EPS that uses a worm gear mechanism as the power transmission mechanism (speed reducer), a worm on the drive shaft of the electric motor meshes with a worm wheel, which is fitted to an output shaft (e.g. a pinion shaft or a column shaft) of the steering mechanism.

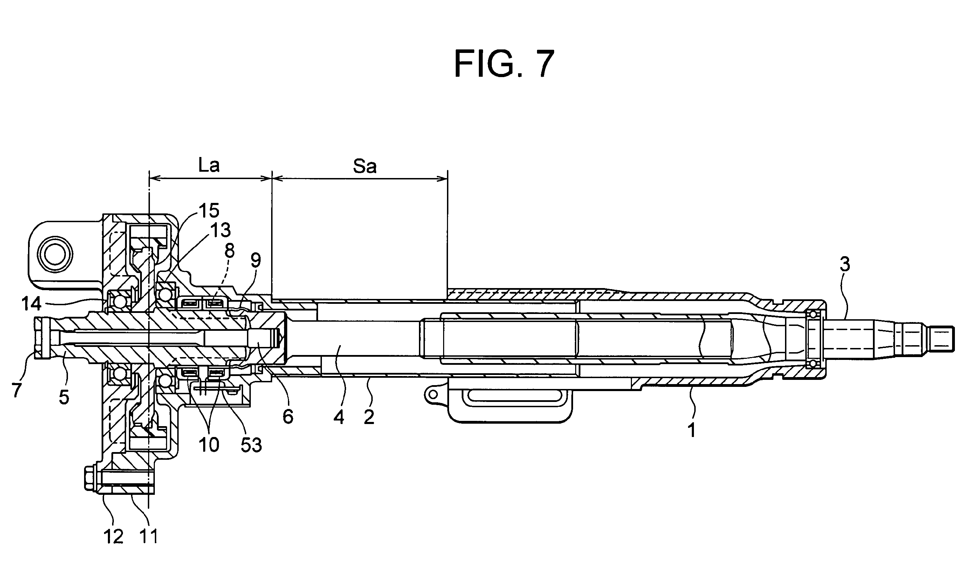

Fig. 7 is a longitudinal cross sectional view of a conventional column assist type electric power steering apparatus, which is disclosed for example in Japanese Patent Application Laid-Open No. 2002-173035.

In the column assist type electric power steering apparatus in which the column shaft is powered by the driving force of an electric motor with a reduced speed, the steering column is composed of an upper column 1 and a lower column 2. The lower column 2 is fitted to the vehicle front side end of the upper column 1, and an upper shaft 3 of the steering shaft and a lower shaft 4 serving as an input shaft, which are spline-fitted, are rotatably supported in these columns 1, 2.

The vehicle front side end of the lower shaft 4 (input shaft) is coupled with an output shaft 5. The vehicle front side end of the output shaft 5 is coupled with a steering gear (not shown) via a universal joint (not shown) or the like.

The base end of a torsion bar 6 is fixedly press-fitted into the vehicle front side end of the lower shaft 4 (input shaft). The torsion bar 6 extends inside the output shaft 5 having a hollow structure, and its end is fixed to an end of the output shaft 5 by a fixing pin 7.

The electric power steering apparatus is provided with a housing 11 on the vehicle rear side and a cover 12 that covers the vehicle front side of the housing. On the vehicle rear side portion of the output shaft 5 inside the housing 11 and the cover 12 are provided grooves 8 used for detection by a torque sensor, and a sleeve 9 of the torque sensor is provided radially outside the grooves 8. The vehicle rear side end of the sleeve 9 is fixed to the vehicle front side end of the lower shaft 4 (input shaft) by, for example, caulking or clinching. Radially outside the sleeve 9 are provided a coil 10 and a circuit board 53 etc.

The input shaft 4 and the output shaft 5 are connected via the torsion bar 6, in which a relative torsion occurs in accordance with the input torque. A change in the impedance generated in the coil 10 by this torsion is detected by the circuit board 53 and output as a signal, based on which assist by an electric motor (not shown) is performed.

A worm wheel 15 meshing with a worm (not shown) that constitutes the drive shaft of the electric motor (not shown) is attached to the output shaft 5 by press-fitting.

A first bearing 13 is provided between the radially inner side of the housing 11 and the output shaft 5, and a second bearing 14 is provided between the radially inner side of the cover 12 and the output shaft 5. Thus, in the conventional structure, the worm wheel 15 is fixed on the output shaft 5, which in turn is rotatably supported on the housing 11 and the cover 12 by means of the pair of bearings 13, 14.

Accordingly, the steering force generated by driver's operation of the steering wheel (not shown) is transmitted to dirigible wheels, which are not shown in the drawing, via the input shaft 4, the torsion bar 6, the output shaft 5 and a rack-and-pinion type steering apparatus. Rotational force of the electric motor (not shown) is adapted to be transmitted to the output shaft 5 via the worm (not shown) and the worm wheel 15, whereby an appropriate steering assist torque is given to the output shaft 5 with a suitable control of the rotational force and the rotation direction of the electric motor (not shown).

Conventionally, in mounting the torque sensor, the coil 10 is attached on the housing 11 using a spring, and thereafter the circuit board 53 is screwed and soldered. The parts side of the circuit board 53 is arranged parallel to the axial direction of the steering shaft 3, 4.

When collapse of the steering column occurs upon secondary collision, the upper column 1 collapses toward the vehicle front over a certain collapse stroke. In the conventional structure shown in Fig. 7, the collapse stroke is equal to the distance (Sa) between the vehicle front side end of the upper column 1 and a stopper structure formed on the vehicle rear side of the housing 11.

According to existing specifications, the length (Sa) of the collapse stroke is sufficient in ensuring a required stroke.

In recent years however, various circumstances demand an increase in the collapse stroke.

On the other hand, it is desired to prevent an increase in the size of the electric power steering apparatus and ensure sufficient ease of mounting it on a vehicle. In addition, it is also desired to use a torque sensor and other parts without any modification thereto.

In view of the above described circumstances, there is a demand for a steering apparatus in which the collapse stroke can be increased without an increase in the size of the electric power steering apparatus to ensure ease of mounting it on a vehicle.

With an increase in the size of the vehicle on which the electric power steering apparatus is mounted and a resulting increase in the output power, it is necessary to increase the size of the worm wheel that constitutes the reduction gear.

In addition, the resin gear portion of the worm wheel has been shifting to one made of a high strength material containing reinforced fiber.

In contrast, the electric power steering apparatus is demanded to be reduced in size and weight, and for example the thickness of its parts is sometimes reduced to decrease the weight of the parts.

However, use of the aforementioned resin gear containing reinforced fiber invites vibration of the resin gear caused by friction between the fibers on the surface of the resin gear and the worm, and vibration noise is likely to be generated.

In addition, thinning of the core metal of the worm wheel leads to a decrease in the natural frequency thereof, and the vibration noise becomes more prominent.

Furthermore, vibration is likely to be transmitted to the steering wheel through the steering shaft, and noise is generated also from the steering wheel.

Still further, there are a large number of parts to be assembled and soldering is needed in the assembling process, which leads to low efficiency of work.

Still further, caution is needed to be taken in handling electronic parts, which leads to an increase in man-hours.

Still further, since the parts side of the circuit board 53 is arranged parallel to the axis of the steering shaft 3, 4 as shown in Fig. 7, the circuit board 53 extends largely in the axial direction, which is disadvantageous in terms of layout.

A conventional electric power steering apparatus for an automobile is provided with a steering shaft one end of which is interlocked with a steering wheel, a column section having a housing that houses the steering shaft in a rotatable manner, and a power assist section including an electric motor for power assist that is driven in a controlled manner based on the steering torque applied on the steering wheel and an output shaft of the power assist mechanism, the output shaft being interlocked with the electric motor.

The input shaft that constitutes the input side end of the power assist section is provided with a spline coated with a resin. The input shaft is fitted to the steering shaft of the column section. The spline provides a telescopic function that enables sliding along the axial direction relative to the steering shaft. The power assist section is further provided with a torque sensor that detects steering torque based on torsion of the torsion bar and a power assist section housing that supports the power side output shaft and accommodates the torque sensor.

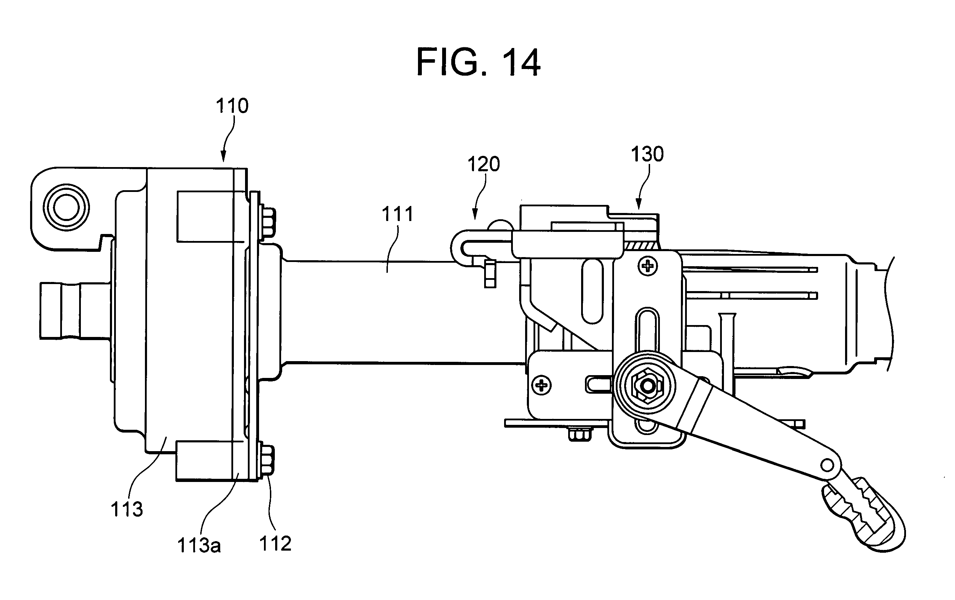

There is a type of electric power steering apparatus that has a coupling structure of the power assist section and the column section in which the coupling portion is accommodated in the column 111 as shown in Fig. 14. In this structure, the input shaft (not shown) of the power assist section 110 and the steering shaft (not shown) of the column section 120 are coupled, and then in the next step the column 111 is slid and secured to a flange portion 113a of the power side housing 113 using bolts 112.

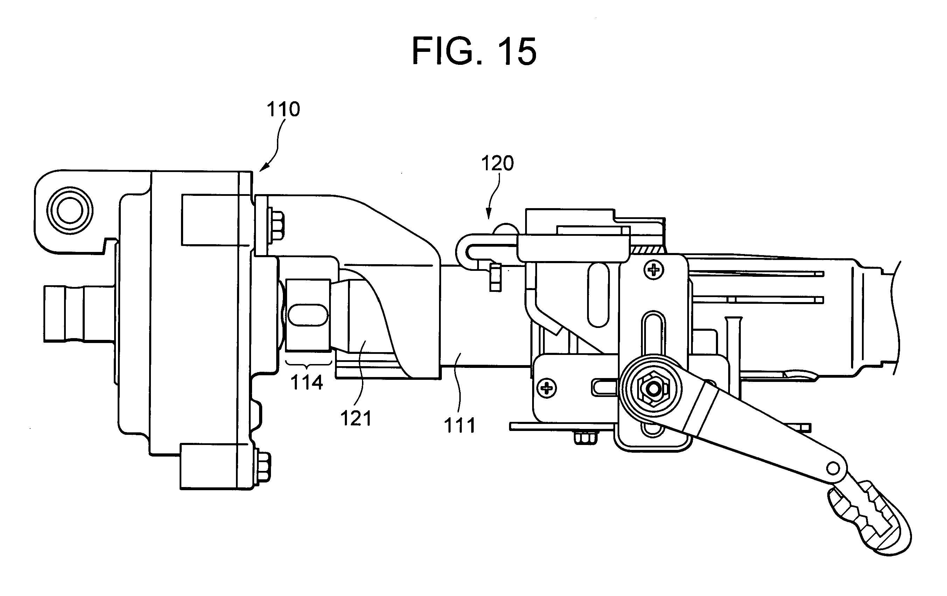

As shown in Fig. 15, there also is a type of electric power steering apparatus in which the coupling portion 114 of the power assist section 110 and the column section 120 is exposed. In this coupling portion 114, since the input shaft (not shown) and the steering shaft 121 are coupled by caulking or clinching, the coupling portion 114 is not covered by the column 111 so that a working space is left.

In this connection, on the right side of the column 120 in Figs. 14 and 15, there is provided a support bracket mechanism 130 that supports the column on a strength member of the vehicle body (not shown) in a manner that allows so-called tilt/telescopic adjustment for adjusting the column in the up-and-down direction and the axial direction. Since this mechanism is conventionally known and does not relate to the present invention directly, a description thereof will be omitted.

In conventional electric power steering apparatuses as described above, however, the type of column section 120 varies widely depending on the type of vehicle, and it is necessary to design the column section 120 as a unit in combination with the power assist section 110. Therefore, there are problems that parts are not versatile, and there is little freedom of design, which leads to an increase in man-hours required for designing and an increase in the number of parts.

Furthermore, it is necessary that performance be ensured in the state in which the column section 120 and the power assist section 110 have been assembled into a unit. If a failure deteriorating the performance occurs in midstream of manufacturing process, the defective product is not discovered sometimes until they are assembled into the finished entire product, which is a waste of work time.

In contrast, in the structure disclosed in Japanese Patent Application Laid-Open No. 2000-85596, the column section and the power assist section can be detached and coupled again. However, this leads to an increase in the number of parts and an increase in man-hours required for assembling, which inevitably leads to an increase in the cost as a result.

### Disclosure of the Invention

A first object of the present invention is to provide an electric power steering apparatus in which the collapse stroke can be increased while maintaining ease of mounting it on a vehicle without increasing the size of the apparatus.

According to a first aspect of the present invention that is intended to achieve the first object, an electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism is characterized in that the gear meshing position in said worm gear mechanism and the position of said torque sensor substantially coincide with each other with respect to the axial direction of said output shaft.

According to a second aspect of the present invention that is intended to achieve the first object, an electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism is characterized in that said torque sensor is arranged substantially radially inside the gear meshing position in said worm gear mechanism.

As described above, according to the invention that is intended to achieve the first object, the gear meshing position in the worm gear mechanism and the position of the torque sensor substantially coincide with each other with respect to the axial direction of the output shaft, and the position of the torque sensor is displaced toward the vehicle front as compared to the conventional structure (Fig. 7).

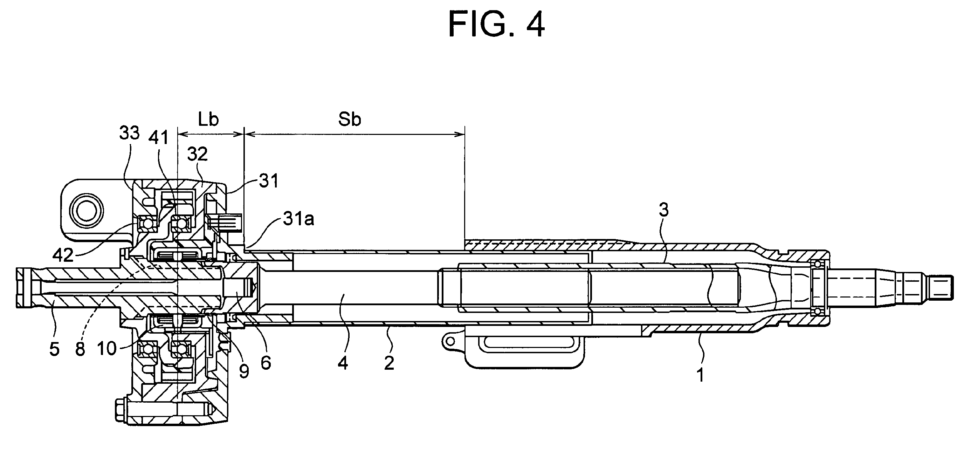

Therefore, according to the invention that is intended to achieve the first object, as shown in Fig. 4, the distance between the gear meshing position in the worm gear mechanism and the position of the stopper structure 31a provided on the vehicle rear side portion of the housing 31 can be reduced from length La in the conventional structure to length Lb.

Consequently, the collapse stroke extending between the vehicle front side end of the upper column 1 and the stopper portion 31a provided on the vehicle rear side portion of the housing 31 can be extended greatly from stroke Sa in the conventional structure to stroke Sb.

Therefore, it is possible to increase the collapse stroke without an increase in the size of the electric power steering apparatus while maintaining ease of mounting it on a vehicle. In addition, the torque sensor and other parts can be used without a modification.

A second object of the present invention is to provide an electric power steering apparatus in which vibration noise generated from a worm wheel is suppressed, coupling of the worm wheel to an output shaft can be made simple, and the length of the entire apparatus along the axial direction can be reduced.

According to a first aspect of the present invention that is intended to achieve the second object, an electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism is characterized in that a worm wheel of said worm gear mechanism is directly supported on a housing in a rotatable manner by means of a bearing.

It is preferred in the electric power steering apparatus according to the present invention that is intended to achieve the second object that the gear meshing position in said worm gear mechanism and the position of said bearing substantially coincide with each other with respect to the axial direction of said output shaft.

It is preferred in the electric power steering apparatus according to the present invention that is intended to achieve the second object that the gear meshing position in said worm gear mechanism and the position at which the worm wheel is coupled to said output shaft be offset from each other with respect to the axial direction of said output shaft.

According to a second aspect of the present invention that is intended to achieve the second object, an electric power steering apparatus in which the steering torque applied on a steering wheel is detected by a torque sensor, and a steering assist torque is generated by an electric motor in accordance with the detected steering torque and transmitted to an output shaft of a steering mechanism with a speed reduced by a worm gear mechanism is characterized in that said torque sensor is constructed as a sensor assembly integrally molded using a synthetic resin with its coil and circuit board.

It is preferred in the electric power steering apparatus according to the second aspect of the present invention that is intended to achieve the second object that said circuit board be arranged substantially perpendicular to the axial direction of a steering shaft.

It is preferred in the electric power steering apparatus according to the second aspect of the present invention that is intended to achieve the second object that a connector be integrally molded in said sensor assembly using the synthetic resin.

It is preferred in the electric power steering apparatus according to the second aspect of the present invention that is intended to achieve the second object that said sensor assembly be integrally molded on a housing using the synthetic resin with its coil and circuit board.

As described above, according to the present invention that is intended to achieve the second object, the worm wheel of the worm gear mechanism is directly supported on the housing in a rotatable manner by means of a bearing, and therefore even if vibration noise is generated due to vibration occurring between the worm wheel and the worm, influences of characteristic vibration of the core metal of the worm wheel can be suppressed to the minimum. Consequently, it is possible to suppress vibration noise. In addition, the vibration generated is absorbed by the housing mainly through the bearing. Therefore, vibration transmitted to the steering shaft is reduced, and it is possible to reduce the noise generated from the steering wheel.

According to the present invention that is intended to achieve the second object, since the gear meshing position in the worm gear mechanism and the position of the bearing substantially coincide with each other with respect to the axial direction of the output shaft, the axial length of the worm wheel, the output shaft and the bearing can be reduced. In addition, the radial load generated on the worm wheel upon meshing is received by the bearing, and the radial load is not transmitted to the output shaft. Accordingly, only rotational torque is transmitted to the output shaft, and therefore the way of coupling the core metal of the worm wheel and the output shaft can be made simpler.

Furthermore, according to the present invention that is intended to achieve the second object, the gear meshing position in the worm gear mechanism and the position at which the worm wheel is coupled to the output shaft is offset from each other with respect to the axial direction of the output shaft. This makes it possible to change the position of the coil of the torque sensor to a position near the center of the housing, thereby making it possible to reduce the axial length of the power steering apparatus.

Still further, according to the present invention that is intended to achieve the second object, the gear meshing position of the worm gear mechanism and the position at which the worm wheel is coupled to the output shaft is offset from each other with respect to the axial direction of the output shaft, and the position of the torque sensor is displaced toward the vehicle front side as compared to the conventional structure (Fig. 7). Accordingly, as shown in Fig. 4, the distance between the gear meshing position in the worm gear mechanism and the position of the stopper structure 31a provided on the vehicle rear side portion of the housing 31 can be reduced from length La in the conventional structure to length Lb. Consequently, the collapse stroke extending between the vehicle front side end of the upper column 1 and the stopper portion 31a provided on the vehicle rear side portion of the housing 31 can be extended greatly from stroke Sa in the conventional structure to stroke Sb. Therefore, it is possible to increase the collapse stroke without an increase in the size of the electric power steering apparatus while maintaining ease of mounting it on a vehicle. In addition, the torque sensor and other parts can be used without modification.

Furthermore, since the torque sensor is constructed as a sensor assembly integrally molded using a synthetic resin with its coil and circuit board, it is possible to eliminate soldering process in assembling, and accordingly it is possible to make the assembling process simpler. In addition, it is possible to make handling of electric parts easy thereby decreasing man-hours.

Furthermore, since the circuit board is arranged substantially perpendicular to the axial direction of the steering shaft, it is possible to reduce the axial length thereof, and the degree of freedom of layout can be increased.

A third object of the present invention is to provide an electric power steering apparatus having a simple structure in which a power assist section and a column section can be coupled easily and stably, without an increase in the number of parts and an increase in man-hours in assembling.

According to the present invention that is intended to achieve the third object, an electric power steering apparatus provided with a column section that supports a steering shaft connected to a steering wheel at one end in such a way as to allow its rotation and slide movement in the axial direction, and a power assist section having an input shaft connected to the other end of the steering shaft and an output shaft that outputs power-assisted torque in accordance with torque input to the input shaft, the column section and the power assist section being united by coupling said input shaft and said steering shaft is characterized in that said input shaft and said steering shaft are brought into close contact with each other by plastically deforming one or both of them, whereby said input shaft and said steering shaft are connected in such a way that their relative rotation and relative displacement in the axial direction are impossible.

It is preferred in the electric power steering apparatus according to the present invention that is intended to achieve the third object that one or both of said input shaft and said steering shaft have a planar portion having a shape obtained by cutting at least a part of a solid cylinder shape along the axial direction.

It is preferred in the electric power steering apparatus according to the present invention that is intended to achieve the third object that said input shaft and said steering shaft be provided with displacement restriction means that makes said relative displacement in the axial direction impossible.

According to the present invention that is intended to achieve the third object, both or one of the input shaft and the steering shaft is plastically deformed, and accordingly it is possible to eliminate looseness in coupling and to couple the power assist section and the column section in an undetachable manner easily and stably without an increase in the number of parts or man-hours. Therefore, according to the present invention that is intended to achieve the third object, it is possible to assemble the power assist section and the column section as separate units and couple or unite them in a last stage. Therefore, performance guarantee of each unit can be conducted easily. Furthermore, according to the present invention that is intended to achieve the third object, it is possible to design the power assist section as a versatile unit and design column sections separately. Therefore, it is possible to increase the degree of freedom of design and reduce the cost.

### Brief Description of the Drawings

Fig. 1 is a longitudinal cross sectional view of a relevant portion of a column assist type electric power steering apparatus according to a first embodiment of the present invention.
Fig. 2 is a longitudinal cross sectional view of a relevant portion of a column assist type electric power steering apparatus according to a second embodiment of the present invention.
Fig. 3 is a longitudinal cross sectional view of a relevant portion of a column assist type electric power steering apparatus according to a third embodiment of the present invention.
Fig. 4 is a longitudinal cross sectional view of a column assist type electric power steering apparatus according to the present invention.
Fig. 5A is a longitudinal cross sectional view of a relevant portion of a column assist type electric power steering apparatus according to a fourth embodiment of the present invention, and Fig. 5B is a cross sectional view of a sensor assembly.
Fig. 6A is a longitudinal cross sectional view of a relevant portion of a column assist type electric power steering apparatus according to a fifth embodiment of the present invention, and Fig. 6B is a cross sectional view of a sensor assembly.
Fig. 7 is a longitudinal cross sectional view of a conventional column assist type electric power steering apparatus.
Fig. 8 is an exploded view of a coupling portion of a power assist section and a column section of an ESP according to a sixth embodiment of the present invention.
Figs. 9A and 9B are front views of an input shaft and a steering shaft in the sixth embodiment respectively.
Figs. 10A to 10C are cross sectional views of a coupling structure of the input shaft and the steering shaft respectively in the state of assembling, in the state during plastically deforming by caulking or clinching and in the state after having plastically deformed by caulking or clinching.
Fig. 11 is an exploded view of a coupling portion of a power assist section and a column section of an EPS according to a seventh embodiment of the present invention.
Figs. 12A and 12B are a front view of an input shaft and a front view of a steering shaft in the seventh embodiment of the present invention.
Figs. 13A to 13C are cross sectional views illustrating a coupling structure of an input shaft and a column shaft respectively in the state before plastically deforming by caulking or clinching, in the state after having plastically deformed by caulking or clinching and in the state fixed by a rivet.
Fig. 14 is a side view of a coupling portion (accommodated in a column) of a power assist section and a column section of a conventional EPS.
Fig. 15 is a side view of a coupling portion (exposed) of a power assist section and a column section of a conventional EPS.
Fig. 16 is a longitudinal, central cross sectional view of a coupling portion of a power assist section and a column section of a column assist type electric power steering apparatus according to an eighth embodiment of the present invention.
Fig. 17 is a right side view of the coupling portion shown in Fig. 16.
Fig. 18 is a longitudinal, central cross sectional view of a sensor assembly.
Fig. 19 is a left side view of the sensor assembly shown in Fig. 18.
Fig. 20 is a right side view of the sensor assembly shown in Fig. 18.

### Best Mode for Carrying Out the Invention

In the following, electric power steering apparatuses according to embodiments of the present invention will be described with reference to the drawings.

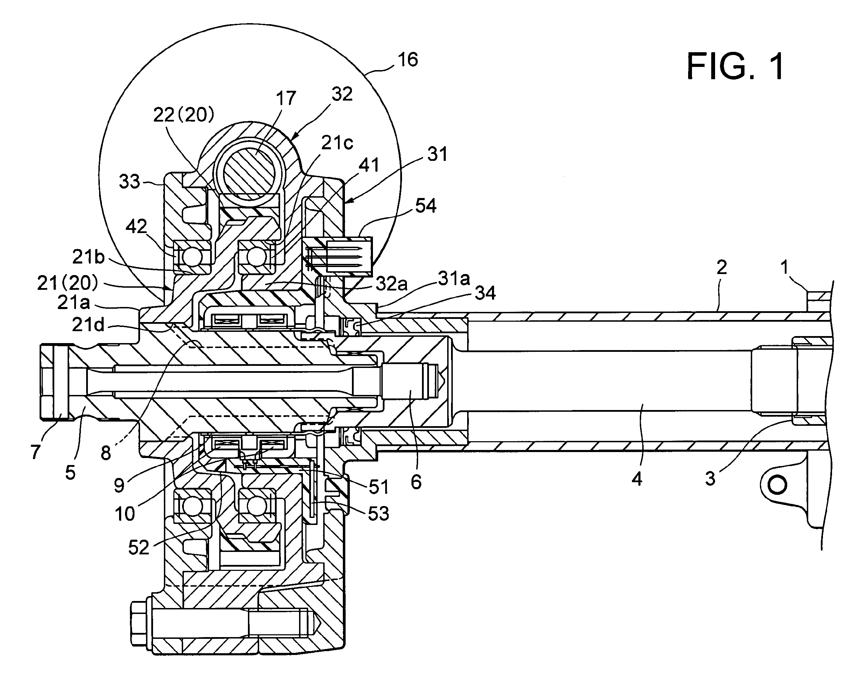

Fig. 1 is a longitudinal cross sectional view of a relevant portion of a column assist type electric power steering apparatus according to a first embodiment of the present invention.

As shown in Fig. 1, a lower shaft 4 that constitutes the input shaft is connected at its vehicle front side end, with an output shaft 5. The output shaft 5 is connected at its vehicle front side end, with a steering gear (not shown) by means of a universal joint (not shown) or the like. To the vehicle front side end of the lower shaft 4 (input shaft) is fixed the base end of a torsion bar 6 by press-fitting. The torsion bar 6 is extending through the hollow interior of the output shaft 5, and the end of the torsion bar is fixed on one end of the output shaft 5 using a fixing pin 7.

In this embodiment, a worm wheel 20 of a reduction gear mechanism is composed of a core metal 21 fitted on the output shaft 5 and a resin gear 22 provided on the core metal 21.

The base portion 21a of the core metal 21 projects in the axial direction toward the front of the vehicle and is the smallest in diameter. The base portion 21a is fitted on the output shaft 5. The core metal 21 is slanted to the rear of the vehicle toward its end, and its diameter increases stepwise to have an end step portion 21c having the largest diameter and an intermediate step portion 21b on which later described first and second bearings 41, 42 are respectively fixed. The resin gear 22 is provided on the radially outer portion of the end step portion 21c.

On the radially inner periphery of the base portion 21a of the core metal 21 are provided grooves 21d that fit in grooves for torque detection 8 provided on the output shaft 5, whereby relative rotation of the output shaft 5 and the core metal 21 is prevented.

The output shaft 5 and the core metal 21 are fixed to each other by press-fitting. The minor diameter of the grooves 21d on the core metal 21 is larger than the maximum diameter of the input shaft 4, and therefore, at the time of collapse, the input shaft 4 can move toward the front of the vehicle without interference.

The housing of the electric power steering apparatus includes a vehicle rear side housing element 31, a middle housing element 32 disposed on the vehicle front side thereof and a cover 33 that covers the middle housing element 32 from the front.

The vehicle rear side housing 31 is provided with a stopper structure 31a at its vehicle rear side end. At the time of collapse, the end portion of the upper column 1 abuts the stopper structure 31a. In this embodiment, a seal member 34 for sealing the input shaft 4 is disposed substantially radially inside the stopper structure 31a of the housing 31.

The middle housing 32 has an extension portion 32a that extends to the outer periphery of a resin collar or a resin molded portion 51 that will be described later. A first bearing 41 that will be described in the following is fixedly mounted on the radially outer side of the extension portion 32a.

The sealed first bearing 41 is provided between the radially inner side of the end step portion 21c of the core metal 21 and the radially outer side of the extension portion 32a of the middle housing 32, whereby the core metal 21 is rotatably supported on the middle housing 32.

A sealed second bearing 42 is provided between the radially outer side of the intermediate step portion 21b of the core metal 21 and the radially inner side of the cover 33, whereby the core metal 21 is rotatably supported on the cover 33. With the above described structure, the base portion 21a of the core metal 21 is fixedly fitted on the output shaft 5 outside the housing which includes the middle housing element 31 and the cover 33. The position at which the resin gear 22 of the worm wheel 20 and the worm 17 constituting the output shaft of the electric motor for power assist mesh with each other is offset in the axial direction from the position at which the core metal 21 of the worm wheel 21 is fixedly fitted on the output shaft 5.

In this way, the worm wheel 20 is directly supported on the middle housing 32 and the cover 33 in a rotatable manner by means of the first and second bearings 41, 42, and therefore if vibration noise is generated due to vibration occurring between the worm wheel 20 and the worm 17, influences of natural vibration of the core metal 21 of the worm wheel 20 can be suppressed to the minimum. Consequently, it is possible to suppress vibration noise. In addition, the vibration generated is absorbed by the middle housing 32 and the cover 33 mainly through the first and second bearings 41, 42. Therefore, vibration transmitted to the steering shaft 1, 2 is reduced, and it is possible to reduce the noise generated from the steering wheel (not shown).

Since the position at which the worm 17 and the worm wheel 20 mesh with each other and the position of the first and second bearings 41, 42 substantially coincide with each other with respect to the axial direction of the output shaft 5, the axial lengths of the output shaft 5 and the worm wheel 20 inclusive of the first and second bearings 41 can be reduced. In addition, the radial load generated on the worm wheel 20 upon meshing is received by the first and second bearings 41, 42, and the radial load is not transmitted to the output shaft. Accordingly, only the rotational torque is transmitted to the output shaft 5, and therefore the way of coupling the core metal 21 of the worm wheel 20 and the output shaft 5 can be made simple as with the above described groove fitting and press-fitting.

The output shaft 5 has grooves 8 provided on the vehicle rear side portion thereof for detection by a torque sensor. A sleeve 9 of the torque sensor is provided radially outside the grooves 8. The vehicle rear side end portion of the sleeve 9 is fixed to the vehicle front side end potion of the lower shaft 4 (input shaft) by for example plastic deformation caused by caulking or clinching.

A coil 10 is provided radially outside the sleeve 9. The coil 10 is press-fitted into a resin molded portion 51 provided on the inner periphery of the extension portion 32a of the middle housing 32. To the opposite side of the resin molded portion 51 is welded a fixing cover 52. The resin molded portion 51 may be molded integrally with the coil 10.

An annular circuit board 53 is provided on the resin molded portion 51, and a connector 54 (harness) is provided on the outer circumferential portion of the resin molded portion 51. A sensor for detecting the wheel angle using means to be detected provided on the wheel may be provided on the resin molded portion 51.

The position at which the worm 17 and the worm wheel 20 mesh with each other and the position of the torque sensor substantially coincide with each other with respect to the axial direction of the output shaft. (That is, the torque sensor is disposed radially inside the gear meshing position.)

The position at which the worm 17 and the worm wheel 20 mesh with each other is offset in the axial direction of the output shaft 5 from the position at which the worm wheel 20 and the output shaft 5 are fitted (the base portion 21a of the core metal 21). This makes it possible to change the position of the coil 10 of the torque sensor to a position near the center of the middle housing 32, thereby making it possible to reduce the axial length of the electric power steering apparatus.

Accordingly, the position of the torque sensor is displaced toward the vehicle front side as compared to the conventional structure (Fig. 7). Thus, in this embodiment, the distance between the gear meshing position in the worm gear mechanism and the position of the stopper portion 31a provided on the vehicle rear side portion of the housing 31 can be reduced from length La in the conventional structure to length Lb. Consequently, the collapse stroke extending between the vehicle front side end of the upper column 1 and the stopper structure 31a provided on the vehicle rear side portion of the housing 31 can be extended greatly from stroke Sa in the conventional structure to stroke Sb. Therefore, it is possible to increase the collapse stroke without increasing size of the electric power steering apparatus while maintaining ease of mounting it on a vehicle. The torque sensor and other parts can be used without any modification.

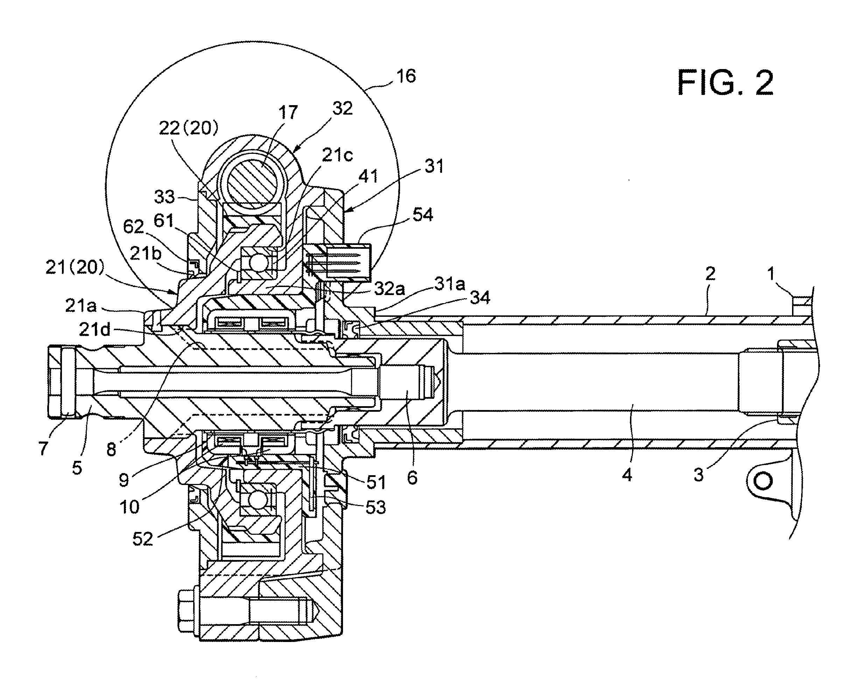

Fig. 2 is a longitudinal cross sectional view of a column assist type electric power steering apparatus according to a second embodiment of the present invention.

The basic structure of this embodiment is the same as that of the above described first embodiment, and only the portions that are different from those in the first embodiment will be described.

In this embodiment, a first bearing 41 is secured to the extension portion 32a of the middle housing 32 by a fastening ring 61 and fixed on the end step portion 21c of the core metal 21 by plastically deforming its end by caulking or clinching.

It is desired that the internal clearance of the first bearing 41 be small, and a four-point contact bearing may be used as the first bearing 41.

A seal member 62 is provided between the cover 33 and the intermediate step portion 21b of the core metal 21, whereby effusion of lubricant is prevented. In addition, elimination of the second bearing 42 makes downsizing of the reduction gear portion possible.

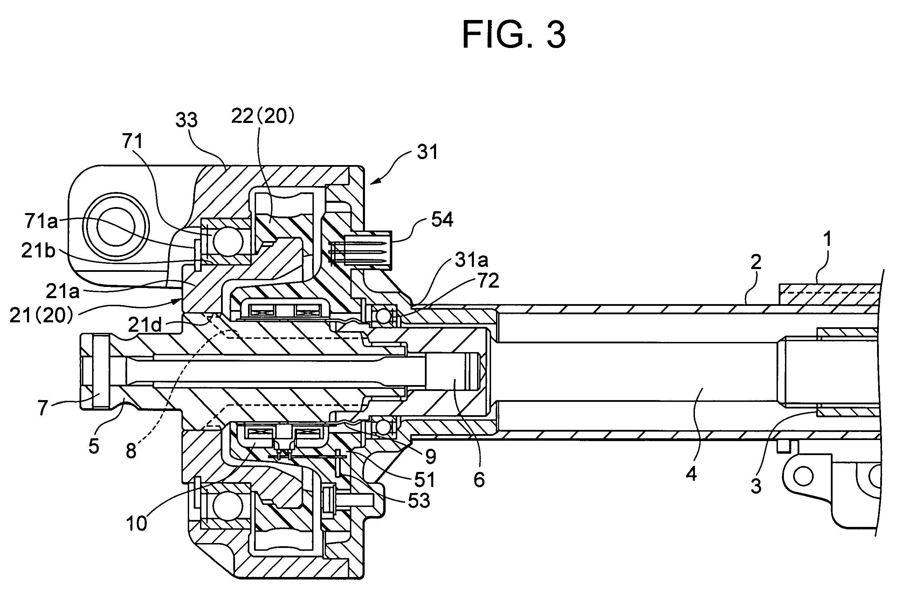

Fig. 3 is a longitudinal cross sectional view of a column assist type electric power steering apparatus according to a third embodiment of the invention. In Fig. 3, illustration of the worm and the electric motor is omitted.

The basic structure of this embodiment is the same as that of the above described first and second embodiments, and only the portions that are different from those in the first and second embodiments will be described.

In this embodiment, the middle housing 32 has been eliminated, and the worm wheel 20 and the torque sensor etc. are accommodated in the interior of a housing 31 and a cover housing 33 coupled to each other.

A sealed first bearing 71 is provided between the intermediate step portion 21b of the core metal 21 and the inner periphery of the cover housing 33, whereby the core metal 21 is rotatably supported on the cover housing 33. The first bearing 71 is secured on the core metal 21 by a fastening ring 71a.

In the third embodiment, a sealed second bearing 72 is provided in place of the seal member 34 in the first and second embodiments. The sealed second bearing 72 is provided between the substantially inner periphery of the stopper portion 31a of the housing 31 and the vehicle front side portion of the lower shaft 4 (input shaft).

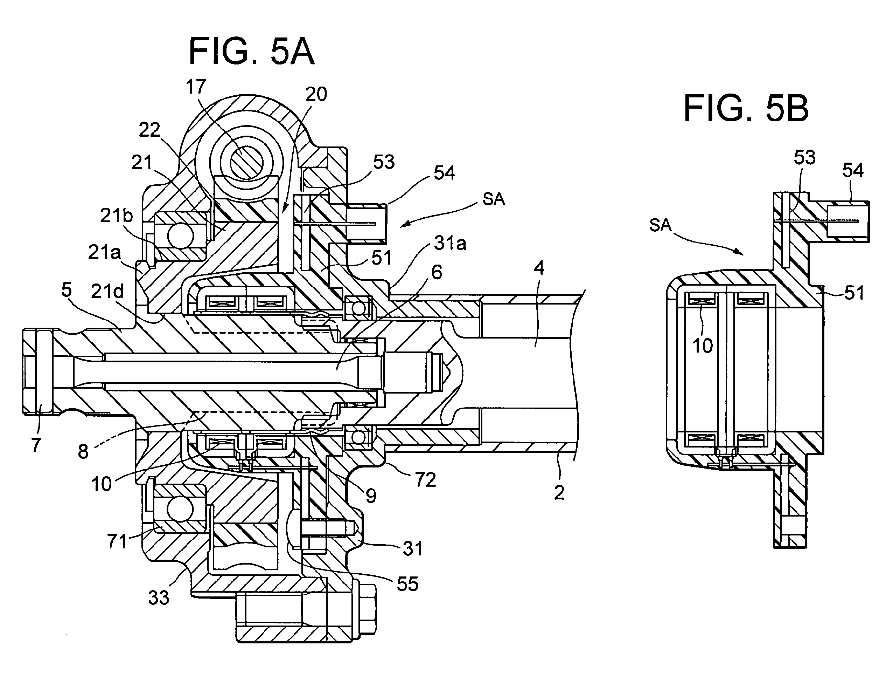

Fig. 5A is a longitudinal cross sectional view of a column assist type electric power steering apparatus according to a fourth embodiment of the present invention. Fig. 5B is a cross sectional view of a sensor assembly.

The basic structure of this embodiment is the same as that of the above described first to third embodiments, and only the portions that are different from those in the first to third embodiments will be described. This embodiment is particularly similar to the third embodiment.

In this embodiment, the torque sensor is constructed as a sensor assembly SA by forming a resin molded portion 51 by molding using a synthetic resin integrally with a coil 10, a circuit board 53 and a connector 54, as shown in Fig. 5B. The sensor assembly SA is fixedly attached to a gear cover 31 (i.e. housing) by screws 55.

Therefore, soldering process during assembling can be eliminated, whereby assembling process can be made simpler. In addition, it is possible to make handling of electric parts easy thereby decreasing man-hours. Specifically, since the parts side of the circuit board 53 is not exposed to the exterior, countermeasure against static electricity is not required, and handling of the parts can be made simpler.

Furthermore, since the circuit board 53 is arranged substantially perpendicular to the axial direction of the steering shaft 3, 4, it is possible to reduce the axial length thereof and increase the degree of freedom of layout.

The coil 10 is connected with the circuit board 53 and molded integrally with it.

The connector 54 for connection with an electronic control unit ECU (not shown) may also be molded integrally in the sensor assembly SA. A harness may also be molded instead of the connector 54.

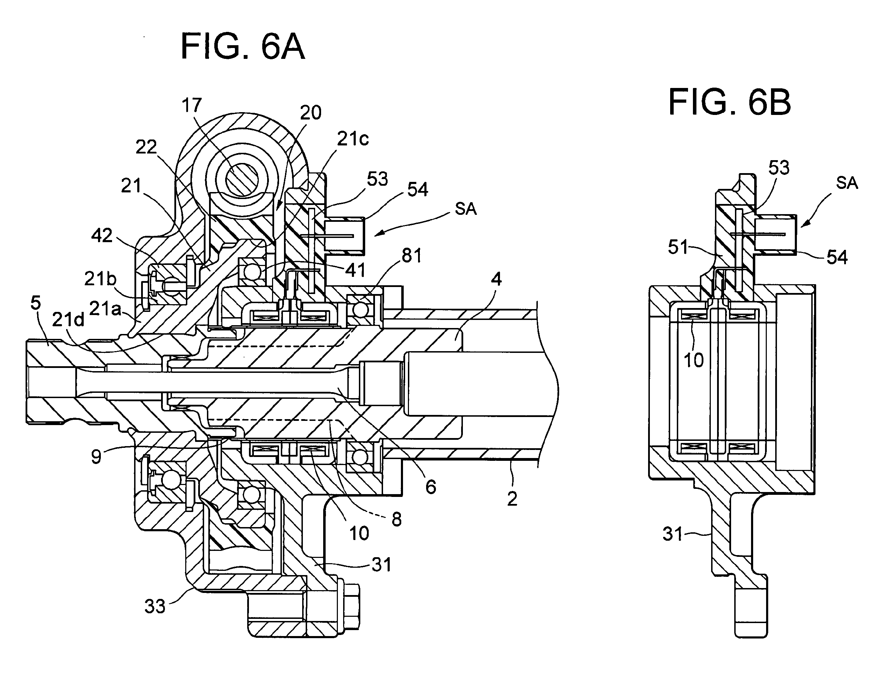

Fig. 6A is a longitudinal cross sectional view of a column assist type electric power steering apparatus according to a fifth embodiment of the present invention. Fig. 6B is a cross sectional view of a sensor assembly.

The basic structure of this embodiment is the same as that of the above described first to fourth embodiments, and only the portions that are different from those in the first to fourth embodiments will be described. This embodiment is particularly similar to the first and fourth embodiments.

In this embodiment, a torque sensor is constructed as a sensor assembly SA by forming a resin molded portion 51 by molding using a synthetic resin integrally with a coil 10, circuit board 53 and a connector 54, as shown in Fig. 6B.

The sensor assembly SA is molded integrally on the housing 31 (gear cover) together with the coil 10 and the circuit board 53 etc. therein.

Therefore, soldering process during assembling can be eliminated, whereby assembling process can be made simpler. In addition, it is possible to make handling of electric parts easier thereby decreasing man-hours. Specifically, since the parts side of the circuit board 53 is not exposed to the exterior, countermeasure against static electricity is not necessary, and handling of the parts can be made simpler.

Furthermore, since the circuit board 53 is arranged substantially perpendicular to the axial direction of the steering shaft 3, 4, it is possible to reduce the axial length thereof and increase the degree of freedom of layout.

The coil 10 is connected with the circuit board 53 and molded integrally with it. The connector 54 for connection with an electronic control unit ECU (not shown) may also be molded integrally in the sensor assembly SA. A harness may also be molded instead of the connector 54.

In this embodiment, the input shaft 4 has grooves 8 provided on the vehicle front side portion thereof for detection by a torque sensor. A sleeve 9 of the torque sensor is provided radially outside the grooves 8. The vehicle front side end portion of the sleeve 9 is fixed to the vehicle rear side end potion of the output shaft 5 by for example plastic deformation caused by caulking or clinching.

The worm wheel 20 (21, 22) is directly supported on the housing 31 (gear cover) and the housing 33 in a rotatable manner by means of the first and second bearings 41, 42, and in addition the input shaft 4 is rotatably supported on the housing 31 (gear cover) by a third bearing 81.

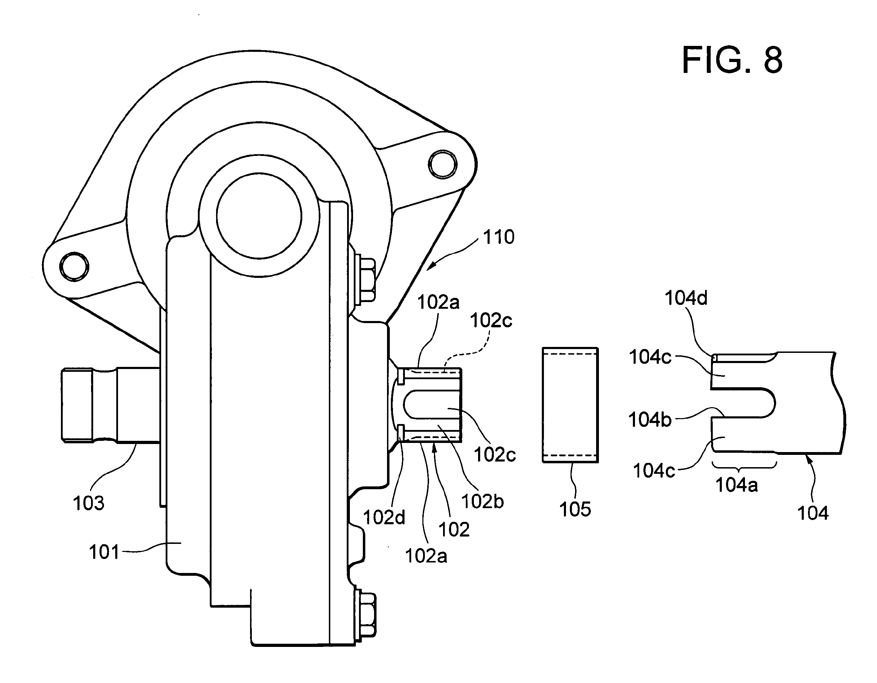

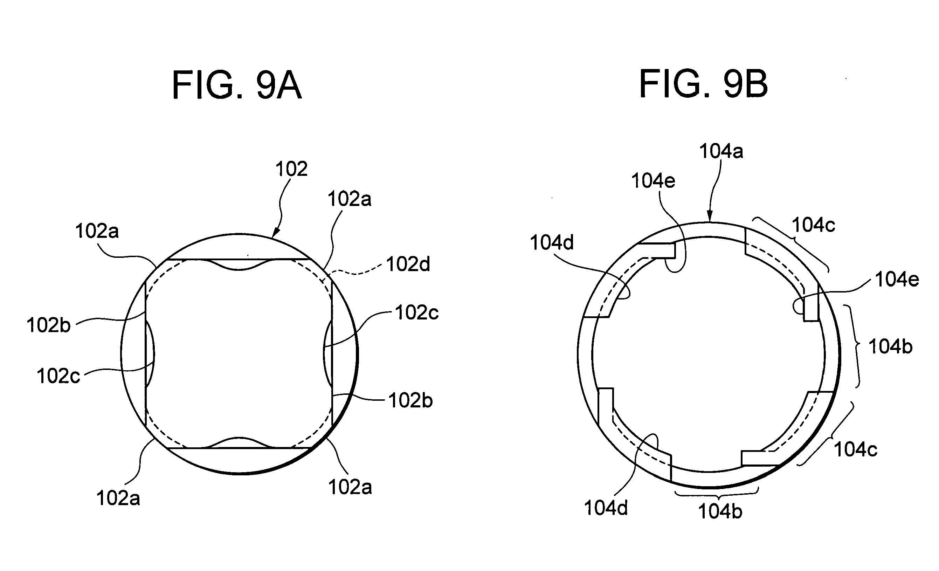

Fig. 8 is an exploded view of a coupling portion of a power assist section and a column section in an electric power steering apparatus (which will be sometimes referred to as EPS hereinafter) according to the sixth embodiment of the present invention. Figs. 9A and 9B are front views of an input shaft and a column shaft in the sixth embodiment respectively.

The sixth embodiment of the present invention will be described with reference to Figs. 8, 9A and 9B. The input shaft 102 rotatably supported on a housing 101 of the power assist section 110 of the electric power steering apparatus (EPS) has a torque sensor (not shown) for detecting the rotational torque of the shaft. An electric motor for power assist and a power assist reduction gear mechanism including a worm attached to the shaft of the motor, a worm wheel meshing with the worm and the like are built in the housing 101. The power assist reduction gear mechanism itself may have a well-known structure. Since the structure does not relate to the present invention directly, it is not illustrated in the drawings. The output shaft 103 on which the worm wheel of the power assist reduction gear mechanism is fitted and fixed and that is rotatably supported on the housing 101 is adapted to transmit driving force of the electric motor that is driven in accordance with the torque detected by the torque sensor to a gear mechanism (not shown) provided in a steering gear box disposed in the lower portion of the vehicle.

In this embodiment, the power assist section 110 and the column section (see Figs. 14 and 15) are assembled as separate units, and coupled to each other at the final stage. The outer appearance of the power assist section 110 and the column section 120 after coupling is basically the same as that shown in Fig. 14 or 15, and therefore illustration of this embodiment in the state after coupling will be omitted.

As shown in Fig. 9A, the input shaft 102 of the power assist section 110 has a shape provided with four planar portions 102b obtained by cutting a solid cylindrical shaft along the axial direction at regular circumferential intervals, and an axial groove 102c having a concaved-arc-shaped cross section is formed at the center of each planar portion 102b along the axial direction. In the cross section of the input shaft 102, four round portions 102a having the same radius from the axial center are provided at regular circumferential intervals, and the portions between the round portions 102a are linear. The center portion of each linear portion has a concaved-arc-shape that is concave toward the axial center. In other words, the cross section of the input shaft 102 is a square having round portions 102a at its corners and a concaved-arc-shape portion at the center of each side of the square. The axial groove 102c is provided along the axial direction over a predetermined length, and an engagement groove 102d having a minimum radius smaller than the radius of the round portion is formed along the circumferential direction in the round portion 102a at the output shaft 103 side end (see Fig. 8) of the axial groove 102c. The axial groove 102c can be formed easily by forging.

On the other hand, the coupling portion 104a of the column side steering shaft 104 is to be fitted on the input shaft 102, and its inner diameter is equal to the outer diameter of the input shaft 102. The coupling portion 104a has cut-away portions 104b having a predetermined axial length (which is, for example, substantially equal to the length of the round portion 102a) provided at positions corresponding to the axial grooves 102c on the planar portions 102b of the input shaft 102. As shown in Fig. 9B, the axial end portions of fitting portions 104c of the coupling portion 104a remaining between the cut-away portions 104b are bent radially inwardly to form first engagement portions 104d. One circumferential end side of each fitting portion 104c is also bent radially inwardly to form a second engagement portion 104e. The first engagement portions 104d and the engagement grooves 102d on the input shaft 102 constitute displacement regulation means. The first engagement portions 104d have a function of positioning the coupling portion 104a relative to the input shaft 102 with respect to the axial direction, and the second engagement portions 104e have a function of positioning the coupling portion 104a with respect to the rotational direction.

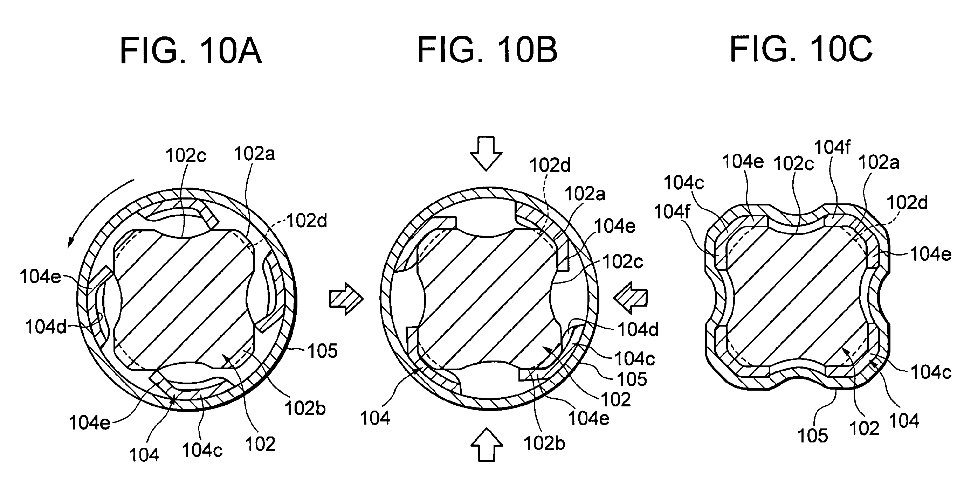

Figs. 10A to 10C are cross sectional views of the coupling structure of the input shaft 102 and the column shaft 104 in the assembling state, in the state during plastically deforming by caulking or clinching and in the state after plastically deformated by caulking or clinching respectively.

In the above described structure, when the power assist section 110 and the column section are coupled, a cylindrical collar 105 is attached to the coupling portion 104a of the steering shaft 104 as shown in Fig. 8, the coupling portion 104a is fitted on the input shaft 102 with the phases of the cut-away portions 104b of the coupling portion 104a and the round portions 102a of the input shaft 102 being aligned as shown in Fig. 10A, and the coupling portion 104a is pushed until the first engagement portions 104d of the coupling portion 104a come to the positions of the engagement grooves 102d of the input shaft 102.

Next, as shown in Fig. 10B, the input shaft 102 and the coupling portion 104a are rotated relative to each other so that the first engagement portions 104d of the coupling portion 104a are fitted into the engagement grooves 102d of the input shaft 102, wherein in this embodiment, the coupling portion 104a is rotated in the direction indicated by an arrow (that is, in the anticlockwise direction, in this embodiment). By fitting the first engagement portions 104d of the coupling portion 104a into the engagement grooves 102d of the input shaft 102 and rotating them by a predetermined amount, the axially extending side surfaces of the round portions 102a of the input shaft are engaged by the second engagement portions 104e of the coupling portion 104a, so that rotation is restricted. At that time, misalignment of the axes of the input shaft 102 and the coupling portion 104a does not occur, since the outer diameter of the round portions 102a of the input shaft 102 and the inner diameter of the fitting portions 104c of the coupling portion 104a are equal to each other.

In this state, a process of applying load at the positions of four axial grooves 102c of the input shaft 102 from outside toward the axial center is performed as shown in Fig. 10B. In doing so, a process of applying load toward the axial center (in the directions indicated by arrows) by pressing from outside in two opposed directions is performed twice while changing the directions by 90 degrees, so that the other side portion 104f of each fitting portion 104c of the coupling portion 104a is caulked or clinched and plastically deformed.

Thus, the fitting portions 104c of the coupling portion 104a are fitted on and brought into close contact with the four round portions 102a of the input shaft 102, and the portions of the collar 105 that are adjacent to the cut-away portions 104a are concaved radially inwardly to follow the depression of four axial grooves 102c of the input shaft 102. With this structure, the coupling portion 104a of the steering shaft 104 cannot rotate in the rotational direction nor move in the axial direction, relative to the input shaft 102. In other words, the input shaft 102 and the steering shaft 104 are undetachable, and misalignment of their axes will not occur.

It is preferred that the caulking or clinching load for causing plastic deformation by caulking or clinching be applied to opposed cut-away portions 104a simultaneously. It is necessary to secure a space around the coupling portion 104a for allowing introduction of the means for applying the load. The tip of the punch for applying the load needs to have a round or spherical shape in order to plastically deform the collar 105 sufficiently up to the depressions of the axial grooves 102c thereby attaining strong fixation.

As per the above, both or one of the input shaft 102 and the steering shaft 104 is plastically deformed to be in close contact with each other, whereby the input shaft 102 and the steering shaft 104 are connected in such a way that they cannot rotate or axially move relative to each other. Accordingly, it is possible to eliminate looseness in coupling, and the power assist section 110 and the column section can be coupled easily without an increase in the number of parts.

Furthermore, since both the input shaft 102 and the steering shaft 104 have concentric cylindrical (arc) shapes, eccentricity of their axes will not occur upon rotation. In addition, thanks to the planar portions 102b having a shape obtained by cutting the cylinder along the axial direction, sufficient strength against the torque that is generated upon transmission of rotational torque is ensured. Furthermore, thanks to the axial displacement restriction means, relative displacement of the input shaft 102 and the steering shaft 104 along the axial direction will not occur.

As per the above, it is possible to assemble the power assist section 110 and the column section as separate units and couple or unite them at a last stage. Therefore, performance guarantee of each unit can be conducted easily. Furthermore, it is possible to design the power assist section as a versatile unit and design column sections separately. Therefore, it is possible to increase the degree of freedom of design and reduce the cost.

Since the power assist section 110 and the column section typically have different functions, even if assembling into the entire unit is performed after conducting performance guarantee for the units, the possibility of deterioration of the performance is low, and problems will not occur even if the column section and the power assist section 110 are coupled in an undetachable manner.

The axial displacement restriction means in this sixth embodiment may be a structure formed by plastic deformation.

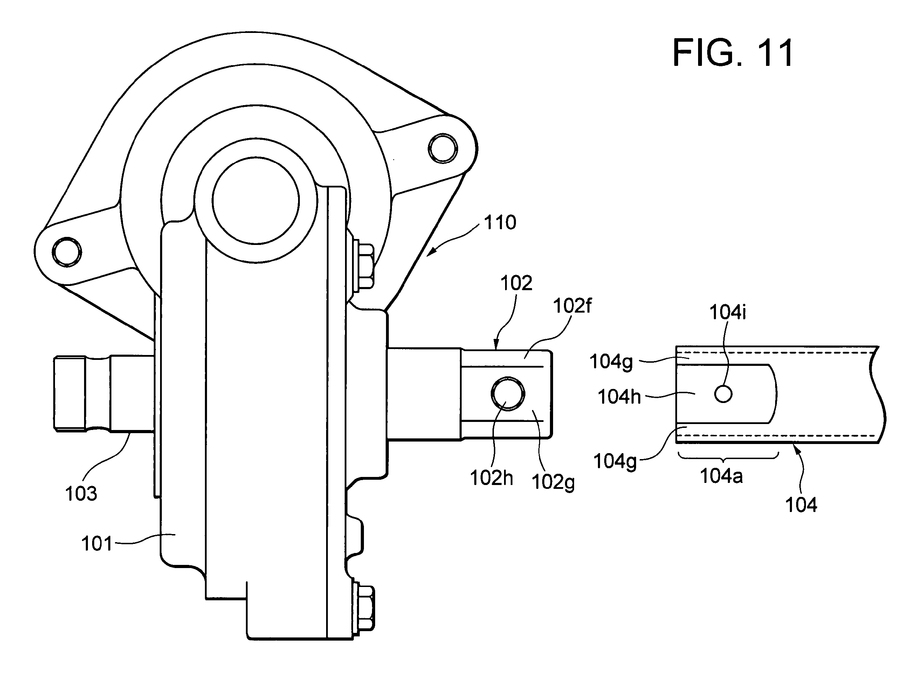

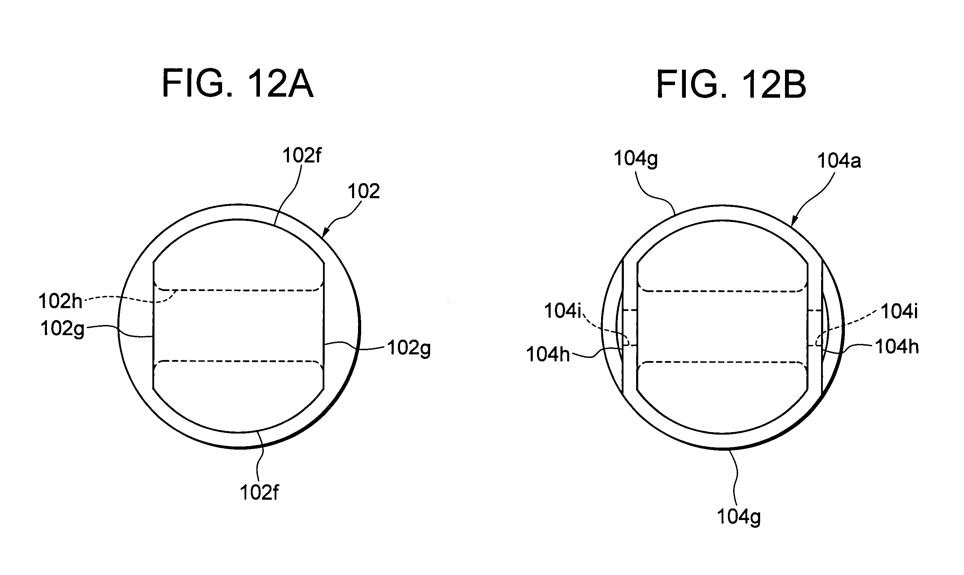

Next, a seventh embodiment will be described with reference to Figs. 11 and 12.

Fig. 11 is an exploded view of the coupling portion of the power assist section and the column section of an EPS according to the seventh embodiment of the present invention. Figs. 12A and 12B are a front view of an input shaft and a front view of a steering shaft in the seventh embodiment.

Some portions of the seventh embodiments are the same as those in the above descried sixth embodiment, and the same members are designated by the same reference numerals. The input shaft 102 in this seventh embodiment has two coaxial round portions 102f having a diameter a little smaller than the diameter of the main part of the shaft, and two planar portions 102g that are arranged parallel to each other with the axial center therebetween are provided between the two round portions with respect to the circumferential direction. The round portions 102f and the planar portions 102g of the input shaft 102 are formed from the shaft end along the axial direction over a predetermined length. At the center of the planar portion 102g is provided a through hole 102h that goes through to the planar portion 102g on the other side.

On the other hand, the coupling portion 104a of the steering shaft 104 is provided with round portions 104g, planar portions 104h and a caulking or clinching hole 104i respectively at positions corresponding to the round portions 102f, planar portions 102g and the through hole 102 of the input shaft 102.

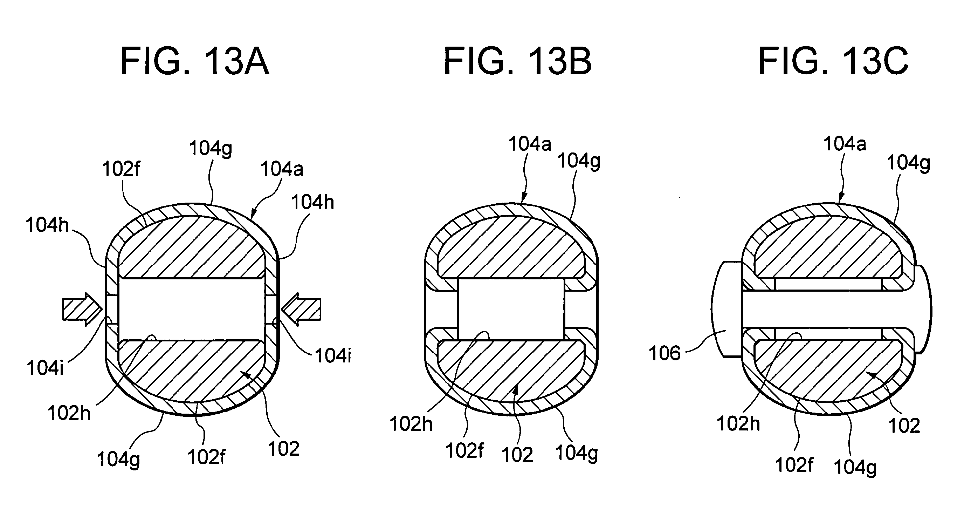

Figs. 13A to 13C are cross sectional views illustrating the coupling structure of the input shaft and the column shaft respectively in the state before caulking or clinching, in the state after caulking or clinching and in the state fixed by a rivet.

When the power assist section 110 and the column section in the above described structure are coupled, the coupling portion 104a of the steering shaft 104 is fitted on the input shaft 102 as shown in Fig. 13A, and thereafter a punch in the form of pins are driven into the caulking or clinching hole 104i portions from both sides in the directions indicated by arrows to caulk(or clinch) or plastically deform the edge of the planar portions 104h. Thus, the edge of the hole 104i in the planar portions 104h of the steering shaft 104 are plastically deformed as shown in Fig. 13B and press-fitted into the through hole 102h of the input shaft 102. In this state, a rivet (or bolt) 106 is inserted through the hole formed by the plastic deformation, and the end of the rivet 106 is spread out as shown in Fig. 13C, whereby the coupling portion 104a of the steering shaft 104 can be firmly attached to the input shaft 102.

As per the above, in the seventh embodiment, the coupling portion 104a of the steering shaft 104 is coupled to the input shaft 102 of the power assist section 110 easily and steadily in such a way as to prevent rotational and axial displacement, though the seventh embodiment has a structure simpler than the sixth embodiment. Therefore, it is needless to say that the seventh embodiment can achieve effects as advantageous as or more advantageous than the sixth embodiment.

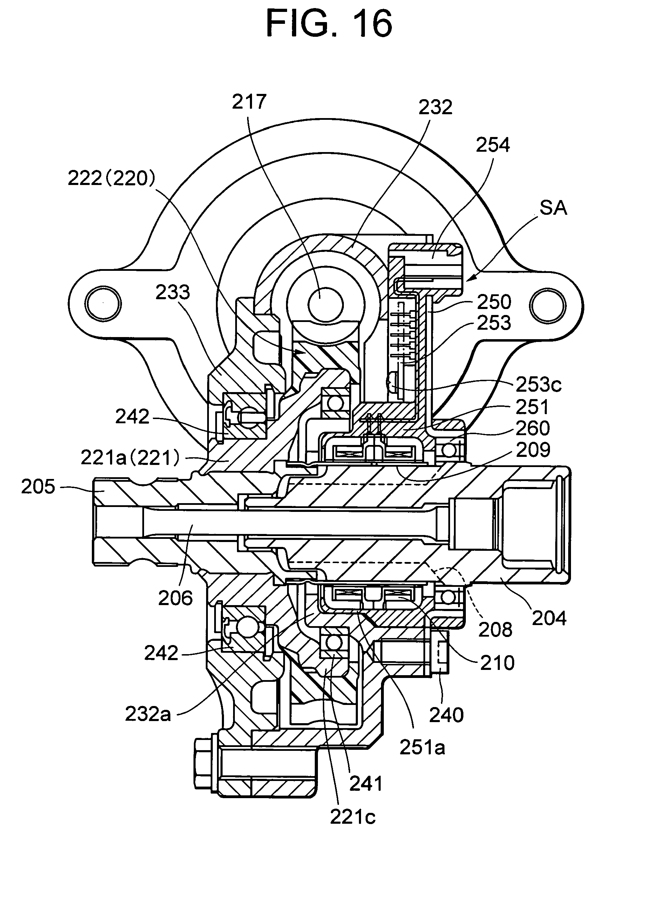

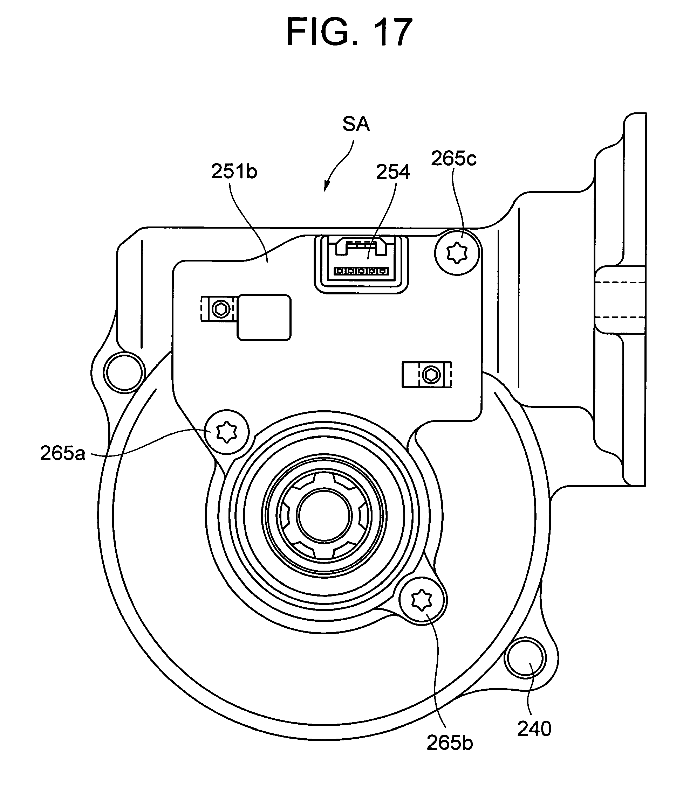

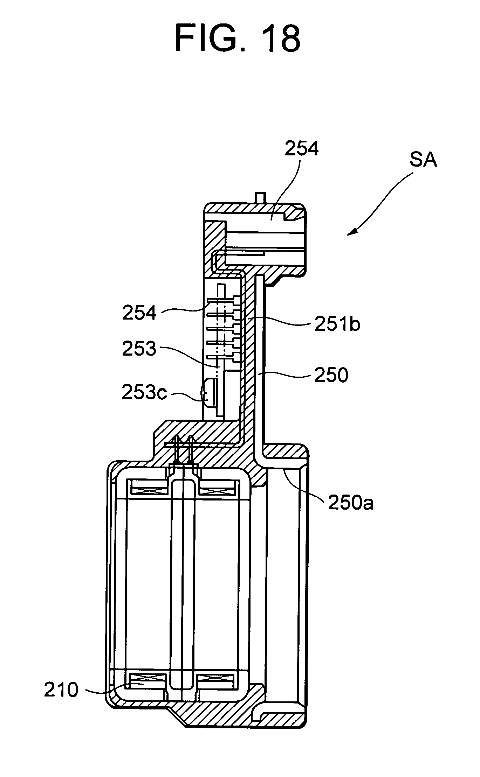

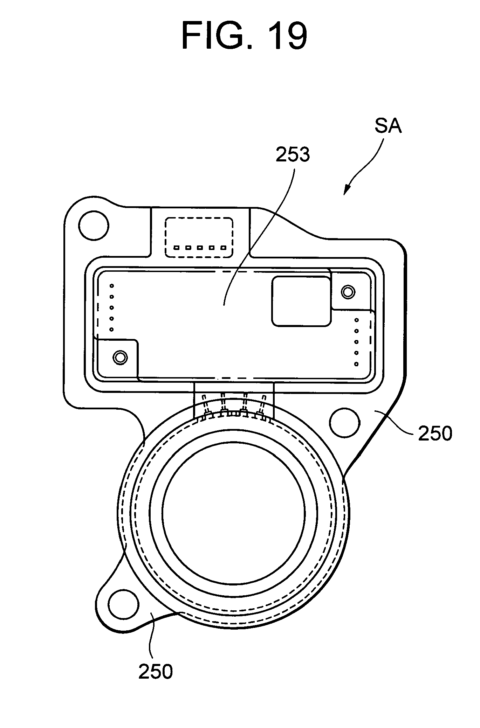

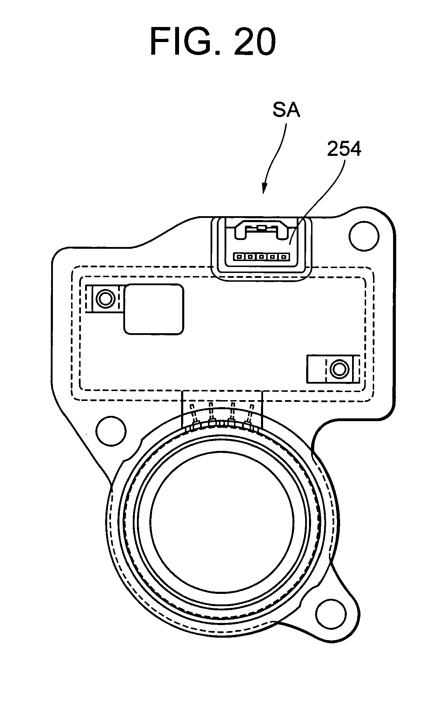

Fig. 16 is a longitudinal, central cross sectional view of the coupling portion of a power assist section and a column section of a column assist type electric power steering apparatus according to an eighth embodiment of the present invention, and Fig. 17 is a right side view thereof. Fig. 18 is a longitudinal, central cross sectional view of a sensor assembly, Fig. 19 is a left side view thereof, and Fig. 20 is a right side view thereof.

The basic structure of this embodiment is the same as that of the above described first to third embodiments, and the portions that are different from those in the first to third embodiments will be mainly described.

As shown in Fig. 16, a lower shaft 204 that constitutes the input shaft is connected, at its vehicle front side end, with an output shaft 205. The output shaft 205 is connected at its vehicle front side end, with a steering gear (not shown) via universal joint (not shown) or the like. To the vehicle front side end of the lower shaft 204 (input shaft) is fixed the base end of a torsion bar 206 by press-fitting. The torsion bar 206 is extending through the hollow interiors of the input shaft 204 and the output shaft 205, and the end of the torsion bar 206 is fixed on one end of the output shaft 205.

In this embodiment, a worm wheel 220 of a reduction gear mechanism is composed of a core metal 221 fitted on the output shaft 205 and a resin gear 222 provided on the core metal 221.

The core metal 221 is fitted onto the output shaft 205 by its base portion 221a protruding toward the front of the vehicle. The core metal extends obliquely toward the rear of the vehicle and is provided with an large diameter end portion 221c at the vehicle rear side end thereof. A resin gear 222 is fixedly provided on the radially outer portion of the large diameter end portion 221c. A first bearing 241 and a second bearing 242 that will be described later are fixedly mounted respectively on the radially inner periphery of the large diameter end portion 221c and on the radially outer periphery of the base portion 221a.

The core metal 221 is fixedly mounted on the output shaft 5 by the inner periphery of its base portion 221a, and relative rotation of the output shaft 5 and the core metal 21 will not occur.

The housing of the electric power steering apparatus includes a housing element 232 that covers a reduction gear mechanism form the radially outside, a cover 233 that covers the housing element 233 from the front and a torque sensor assembly SA fixedly attached to the housing element 232 by bolts 240 at its vehicle rear side.

The housing element 232 is provided, at the vehicle rear side thereof, with a bearing support portion 232a extending in the space formed by the large diameter portion 221c of the core metal 221 and having outer circumferential portion opposed, with respect to the radial direction, to the inner circumferential surface of the large diameter portion 221a. The first bearing 241 is provided between the inner circumferential surface of the large diameter portion 221 of the core metal 220 and the outer circumferential surface of the bearing support portion 220a.

On the other hand, the second bearing 242 is provided between the inner circumferential surface of the cover 233 of the housing and the outer circumferential surface of the base portion 221a of the core metal 220.

The torque sensor assembly SA is a molded part 251 including, as principal constituent parts, an iron plate flange 250, a coil 210, a sensor electronic circuit board 253 and a connector for external connection 254 that are formed into a unit using a synthetic resin.

A cylindrical portion 250a protruding toward the vehicle rear side is integrally formed on the radially inner side of the iron plate flange 250 of the torque sensor assembly AS. A bearing 260 is fixed by press-fitting between the inner circumference of this cylindrical portion 250a and the outer circumference of the input shaft 204, thereby preventing vibration of the input shaft 204.

More specifically, referring to Figs. 18 to 20, the molded part 251 that constitutes the torque sensor assembly AS is integrally provided with a cylindrical portion 251a encircling the outer circumference of the input shaft 204 and axially extending into the space radially inside the bearing support portion 232a of the housing element 232. On the other hand, grooves 208 used for torque detection are formed on the outer periphery of the input shaft 204, and a sleeve 209 of the torque sensor fixedly mounted on the outer circumference of the rear end portion of the output shaft 205 is provided radially outside the grooves 208.

A coil 210 for the torque sensor is provided inside the cylindrical portion 251a in such a way as to encircle the sleeve 209 and opposed thereto with respect to the radial direction.

The molded part 251 is integrally provided with a circuit board support plate portion 251b that has a generally rectangular shape and is integral with the cylindrical portion 251a and extending upwardly from the cylindrical portion 251a. A sensor circuit board 253 is provided on the surface of the circuit board support plate portion 251b that faces inside the housing in such a way as to be substantially perpendicular to the direction of axis of the steering shaft. The sensor circuit board 253 is fixedly mounted on the iron plate flange 250 by a bolt 253c. The sensor circuit board 253 is connected with terminals 253e by soldering, and the terminals 253e are connected with the coil 210 and the connector 254 through conducting wires 255 embedded in the molded part 251.

The torque sensor AS is securely fixed to the surface of the housing element 232 opposed thereto by bolts 265a, 265b and 265c at three positions on the iron plate flange 250.

In this structure, since the sensor circuit board 253 and the iron plate flange 250 are secured by the bolt 253c, and the circuit pattern on the sensor circuit board 253 and the iron plate flange 250 are grounded, it is possible to prevent malfunction caused by electro-magnetic noise. The iron plate flange 250 is fixed to the housing element 232 by the bolts 240, and accordingly, the sensor circuit board 253 and the housing are grounded. This is more advantageous.

Furthermore, since the sensor circuit board 253 is covered by the housing and the iron plate, malfunction due to electromagnetic noise can be prevented.

According to this embodiment, since soldering is not required in assembling the torque sensor, the assembling process can be made simple. Since the parts side of the circuit board is not exposed, countermeasure against static electricity is not necessary. Since the iron plate extends substantially all over the area of the torque sensor assembly AS, the assembly AS has an enhanced strength, and handling of the assembly can be made simple.

In this embodiment also, the output shaft 205 and the input shaft 204 are connected through a torsion bar 206, and a change in the impedance of the coil occurs with torsion of the torsion bar 206 that is caused in accordance with the input torque. An electric motor (not shown) is controlled by the torque sensor assembly AS using a signal indicative of the change in the impedance, and the output of the electric motor is transmitted to the output shaft 205 through the worm wheel 220, so that power assist is performed.

## Claims

1. An electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, **characterized in that** the gear meshing position in said worm gear mechanism and the position of said torque sensor substantially coincide with each other with respect to the axial direction of said output shaft.

2. An electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, **characterized in that** said torque sensor is arranged substantially radially inside the gear meshing position in said worm gear mechanism.

3. An electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, **characterized in that** a worm wheel of said worm gear mechanism is directly supported on a housing in a rotatable manner by means of a bearing.

4. An electric power steering apparatus according to claim 3, **characterized in that** the gear meshing position in said worm gear mechanism and the position of said bearing substantially coincide with each other with respect to the axial direction of said output shaft.

5. An electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, **characterized in that** the gear meshing position in said worm gear mechanism and the position at which said worm wheel is coupled to said output shaft are offset from each other with respect to the axial direction of said output shaft.

6. An electric power steering apparatus according to claim 5, **characterized in that** said coupling position is outside a housing that accommodates said worm gear mechanism.

7. An electric power steering apparatus in which steering torque applied on a steering wheel is detected by a torque sensor, and a steering assist torque is generated by an electric motor in accordance with the detected steering torque and transmitted to an output shaft of a steering mechanism with a speed reduced by a worm gear mechanism, **characterized in that** said torque sensor is constructed as a sensor assembly integrally molded using a synthetic resin with its coil and circuit board.

8. An electric power steering apparatus according to claim 7, **characterized in that** said circuit board is arranged substantially perpendicular to the axial direction of a steering shaft.

9. An electric power steering apparatus according to claim 7 or 8, **characterized in that** a connector is integrally molded in said sensor assembly using the synthetic resin.

10. An electric power steering apparatus according to claim 7 or 8, **characterized in that** said sensor assembly is integrally molded on a housing using the synthetic resin with its coil and circuit board.

11. An electric power steering apparatus according to claim 9, **characterized in that** said sensor assembly is integrally molded on a housing using the synthetic resin with its coil and circuit board.

12. An electric power steering apparatus provided with a column section that supports a steering shaft connected to a steering wheel at one end in such a way as to allow its rotation and slide movement in the axial direction, and a power assist section having an input shaft connected to the other end of the steering shaft and an output shaft that outputs power-assisted torque in accordance with torque input to the input shaft, the column section and the power assist section being united by coupling said input shaft and said steering shaft, **characterized in that** said input shaft and said steering shaft are brought into close contact with each other by plastically deforming one or both of them, whereby said input shaft and said steering shaft are connected in such a way that their relative rotation and relative displacement in the axial direction are impossible.

13. An electric power steering apparatus according to claim 12, **characterized in that** one or both of said input shaft and said steering shaft have a planar portion having a shape obtained by cutting at least a part of a solid cylinder shape along the axial direction.

14. An electric power steering apparatus according to claim 12 or 13, **characterized in that** said input shaft and said steering shaft are provided with displacement restriction means that makes said relative displacement in the axial direction impossible.

15. An electric power steering apparatus provided with a worm gear mechanism that detects steering torque applied on a steering wheel by means of a torque sensor, generates a steering assist torque by an electric motor in accordance with the detected steering torque and transmits it to an output shaft of a steering mechanism, and a housing that covers the worm gear mechanism, **characterized in that** a coil for said torque sensor, a connector for electric connection therefor and terminals for connecting them are integrated on an iron plate to constitute a torque sensor assembly, each terminal being connected with a sensor circuit board by soldering.

16. An electric power steering apparatus according to claim 15, **characterized in that** said torque sensor assembly is integrally molded using a synthetic resin.

17. An electric power steering apparatus according to claim 15 or 16, **characterized in that** said iron plate is integral with a cylindrical portion encircling a steering shaft, the cylindrical portion supporting the steering shaft via a bearing.

18. An electric power steering apparatus according to claim 15, **characterized in that** said sensor circuit board is fixed on said iron plate by a bolt thereby being electrically connected to it.

19. An electric power steering apparatus according to claim 15, **characterized in that** said sensor circuit board is arranged substantially perpendicular to the axial direction of a steering shaft.

20. An electric power steering apparatus according to claim 15, **characterized in that** said torque sensor assembly is a molded part in which said coil, said connector for electric connection and said terminal are integrated on said iron plate using a synthetic resin.
